# EUROPÄISCHE PATENTSCHRIFT

(11) **EP 2 049 451 B1**
(45) Veröffentlichungstag und Bekanntmachung des Hinweises auf die Patenterteilung: **29.10.2014**
(21) Anmeldenummer: 07788175.3
(22) Anmeldetag: 02.08.2007
(51) Int. Cl.: C04B 35/462, C04B 35/66, C21B 7/06

(54) **TITANHALTIGER ZUSCHLAGSTOFF**
TITANIUM-CONTAINING ADDITIVE
ADDITIF CONTENANT DU TITANE

(30) Priorität: 02.08.2006 DE 102006036388
(43) Veröffentlichungstag der Anmeldung: 22.04.2009
(73) Patentinhaber: Sachtleben Chemie GmbH, 47198 Duisburg (DE)
(72) Erfinder: AMIRZADEH-ASL, Djamschid, 47445 Moers (DE)
(74) Vertreter: Uppena, Franz
(86) Internationale Anmeldenummer: PCT/EP2007/058036
(87) Internationale Veröffentlichungsnummer: WO 2008/015259

(56) Entgegenhaltungen:
- EP-A- 0 859 063
- EP-A- 1 295 656
- WO-A-2007/048406
- DE-A1- 19 925 144
- DE-C1- 4 437 548
- GB-A- 2 025 832
- RU-C1- 2 179 583
- RU-C1- 2 255 114
- DIERICH J-C ET AL: "EIGENSCHAFTEN SYNTHETISCHER TITANHALTIGER MATERIALIEN ZUR VERSCHLEISSMINDERUNG IN HOCHOEFEN" STAHL UND EISEN, VERLAG STAHLEISEN, DUSSELDORF, DE, Bd. 119, Nr. 8, 16. August 1999 (1999-08-16), Seiten 85-90, XP000876481 ISSN: 0340-4803
- "Titania Slag for Improving Blast Furnace Hearth Lining Life" STAHL UND EISEN, VERLAG STAHLEISEN, DUSSELDORF, DE, Bd. 100, Nr. 17, 25. August 1980 (1980-08-25), Seite 1037, XP002023684 ISSN: 0340-4803

## Beschreibung

Gegenstand der Erfindung ist ein titanhaltiger Zuschlagstoff, ein Verfahren zu seiner Herstellung und seine Verwendung.

Die Verwendung von titanhaltigen Zuschlagstoffen in metallurgischen Prozessen ist seit langem bekannt. Die Wirkung von titanhaltigen Zuschlagstoffen beruht dabei auf der Bildung von hochtemperaturbeständigen und verschleißfesten Ti(C,N)-Verbindungen, die eine temperaturabhängige Löslichkeit im Roheisen aufweisen. Bei Unterschreitung der Löslichkeitsgrenze, was insbesondere in schadhaften Gestellbereichen durch eine erhöhte Wärmeabfuhr nach außen der Fall sein kann, kommt es zur Ausscheidung der Ti(C,N)-Verbindungen aus dem Roheisen, zu ihrer Ablagerung in den stärker verschlissenen Bereichen des Mauerwerks und damit zu einem intrinsischem "Heißreparatureffekt".

Zu diesem Zweck werden verschiedene titanhaltige Materialien in metallurgischen Prozessen oder zur Herstellung von Produkten eingesetzt. Bei den im Stand der Technik eingesetzten titanhaltigen Zuschlagstoffen handelt es sich üblicherweise um titanhaltige Materialien.

So ist beispielsweise die Verwendung von Rückständen aus der TiO₂-Produktion (TiO₂-Rückstände) als titanhaltiger Zuschlagstoff in der metallurgischen Industrie bekannt. In der DE-C-4419816 wird ein titanhaltiger Zuschlagstoff, bestehend aus TiO₂-Rückständen und weiteren Stoffen, offenbart.

Die DE-C-19705996 offenbart ein Verfahren zur Herstellung eines TiO₂-enthaltenden Zuschlagstoffes. Dabei wird eine Mischung aus TiO₂-Rückständen und Eisen bzw. Eisenverbindungen bei 200 bis 1300°C thermisch behandelt. Ein Nachteil dieser technischen Lehre ist die umständliche Dosierung und Mischung der TiO₂-Rückstände mit den jeweiligen weiteren Bestandteilen des Zuschlagstoffes.

Die EP-A-0 611 740 offenbart die Verwendung von Rückständen aus der TiO₂-Produktion (TiO₂-Rückstände) mit anderen Bestandteilen als titanhaltiger Zuschlagstoff zur Erhöhung der Haltbarkeit der feuerfesten Ausmauerung eines Ofens. Hierbei werden in aufwändigen Verfahren aus den Rückständen TiO₂-haltige Formkörper wie Briketts, Pellets oder Granulat hergestellt. Diese Produkte sind jedoch sehr grobstückig und können in metallurgischen Prozessen und zur Herstellung von Produkten nicht oder nur mit schlechten Ergebnissen eingesetzt werden.

Weiterhin bekannt ist die Injektion von feinteiligen titanhaltigen Zuschlagstoffen unmittelbar in den Bereich des Gestells. Die Injektion von titanhaltigen Zuschlagstoffen im Bereich des Gestells weist eine Reihe von Vorteilen auf:
- die Einbringung erfolgt in unmittelbarer Nähe der Schadstellen bzw. der zu schützenden Bereiche der Ausmauerung, somit können die titanhaltigen Stoffe gezielt und in geringeren Konzentrationen eingesetzt werden;
- die Wirkungszeit, insbesondere beim Auftreten von Hot Spots in der Ofenwand, ist kürzer;
- es tritt keine Ansatzbildung durch titanhaltige Stoffe im Hochofenschacht auf;
- geringere Einsatzmengen und höherer Umsetzungsgrad zu Ti(C,N)-Verbindungen führt zu verbesserter Schlackenqualität durch niedrigere TiO₂-Gehalte und somit zur problemloseren Vermarktung des Hüttensandes.

Bekannt ist auch, Stück-Ilmenit (Ilmenit-Struktur; FeTiO₃) als natürliche Quelle für das benötigte Titan zur Verschleißminderung im Hochofen einzusetzen.

Zur Herstellung von Titandioxid wird als Ausgangsstoff das Titanerz Ilmenit, ein Mineral mit der Formel FeTiO₃, eingesetzt. Ilmenit wird zu diesem Zweck auch in Kombination mit dem Titanerz Rutil (TiO₂) verwendet.

Die Förderung des Ilmenit-Erzes erfolgt im Tagebau. Dabei wird das Erz zunächst in kleine Stücke mit einer Größe von ca. 12 mm gebrochen und dann zu einem feinen Pulver zermahlen. Die im Erz enthaltenen Verunreinigungen werden in einem aufwändigen Verfahren abgetrennt. Nach Abtrennung der Gangart wird dann aus dem Erz ein Ilmenitkonzentrat mit einem Titandioxidanteil von ca. 50 Gew.-% (berechnet aus dem Gesamttitangehalt) gewonnen. (Wird im Folgenden von Titandioxidanteilen in Gew.-% gesprochen, ist damit, wenn nicht anders angegeben, im Sinne der Erfindung der Anteil berechnet aus dem Gesamttitangehalt gemeint.)

Als Rohstoff zur Gewinnung vom Titandioxid wird außerdem titandioxidreiche Schlacke eingesetzt. Hierbei wird in der Lagerstätte Ilmeniterz abgebaut und zerkleinert. Anschließend wird das gemahlene Erz mit Kohle gemischt und in einem Lichtbogenofen geschmolzen. Dabei entsteht Qualitätseisen. Die bei diesem Prozess anfallende titandioxidreiche Schlacke, beispielsweise die so genannte Sorelschlacke, kann bis zu 90 Gew.-% Titandioxid (berechnet aus dem Gesamttitangehalt) enthalten.

Im Gegensatz zu synthetischen titanhaltigen Materialien, sind die natürlichen titanhaltigen Materialien aufgrund ihrer Grobstückigkeit bzw. ihrer fehlenden Feinkörnigkeit für den Einsatz in metallurgischen Prozessen, für den Einsatz in Feuerfestmaterialien, zur Injektion in metallurgische Öfen zur Erhöhung der Haltbarkeit der Ofenausmauerungen, zur Injektion in Schlackenschäume bei der Stahlproduktion, für den Einsatz in Stichlochmassen, für den Einsatz in Kohle-/Graphitelektroden, für den Einsatz als Zuschlagstoff für Baustoffe, für Kohlenstoff-/Graphitsteine, für Kohlenstoff-/Graphitstampfmassen, für kohlenstoffgebundene Erzeugnissen, als Katalysatoren nicht oder nur teilweise und mit schlechten Ergebnissen geeignet. Die fehlende Feinkörnigkeit und die kantige Struktur der Teilchen dieser natürlichen Rohstoffe verursacht durch ihre abrasiven Eigenschaften bei der Anwendung, z. B beim Einblasen in einen Hochofen, starke Errosionen (Korrosionen; Verschleiß...) in den Blasformen, so dass eine dauerhafte Verwendung nicht möglich ist. Bei der Herstellung von Produkten ist die Reaktionsgeschwindigkeit bei Einsatz von natürlichen titanhaltigen Materialien aufgrund Reaktionsgeschwindigkeit bei Einsatz von natürlichen titanhaltigen Materialien aufgrund ihrer Grobstückigkeit bzw. ihrer fehlenden Feinkörnigkeit nicht ausreichend und führt zu unbefriedigenden Ergebnissen. Folglich sind die in dieser Form vorliegenden natürlichen titanhaltigen Materialien nicht als titanhaltige Zuschlagstoffe im Sinne der Erfindung einsetzbar.

Eine Aufgabe der vorliegenden Erfindung ist es, titanhaltige Zuschlagstoffe auf natürlicher Basis bereitzustellen.

Eine weitere Aufgabe der vorliegenden Erfindung ist es, titanhaltige Zuschlagstoffe auf Basis von TiO₂-reichen Schlacken bereitzustellen.

Unter "titanhaltigem Zuschlagstoff" im Sinne der Erfindung sind feinkörnige titanhaltige Additive zu verstehen, die in der Lage sind, in Prozessen oder bei der Herstellung von Produkten mit in diesen Prozessen enthaltenen oder mit bei der Herstellung von Produkten anwesenden geeigneten Reaktionspartnern hochtemperaturbeständige und verschleißfeste Titanverbindungen, wie beispielsweise Aluminiumtitanate, Magnesiumtitanate, Ti(C,N)-Verbindungen oder Mischungen solcher Verbindungen zu bilden. "Auf natürlicher Basis" im Sinne der Erfindung bedeutet, dass der titanhaltige Anteil der titanhaltigen Zuschlagstoffe bis zu 100 % aus natürlichem titanhaitigem Material besteht.

Insbesondere Aufgabe der vorliegenden Erfindung ist es, solche titanhaltigen Zuschlagstoffe
- zur Injektion in metallurgischen Öfen zur Erhöhung der Haltbarkeit der Ofenausmauerungen,

Erfindungsgemäß gelöst wird diese Aufgabe durch die Merkmale des Hauptanspruchs. Vorzugsweise Ausgestaltungen sind in den Unteransprüchen charakterisiert.

Erfingdungsgemäß werden dazu die titanhaltigen Materialien in geeigneter Weise micronisiert. Die Micronisierung kann dabei beispielsweise in einer Stift-, einer Coloplex-, einer Zirkoplex-, einer Dampf- oder Luftstrahlmühle oder Kugelmühle oder in einem Mahltrockner erfolgen. Das auf diese Weise erhaltene titanhaltige Material weist zu 100 % eine Feinheit von kleiner als 5 mm, bevorzugt von kleiner als 2 mm, besonders bevorzugt von kleiner 0.5 mm und ganz besonders bevorzugt von kleiner als 0,2 mm auf. Die mittlere Teilchengröße beträgt erfindungsgemäß bevorzugt 0,01 µm bis 2.000 µm, ganz besonders bevorzugt 0,1 µm bis 1.000 µm. Das so erhaltene Material ist als titanhaltiger Zusatzstoff im Sinne der Erfindung geeignet. Als titanhaltige Ausgangsmaterialien können Titanerze, titandioxidreiche Schlacken oder Mischungen dieser Materialien in beliebiger Zusammensetzung eingesetzt werden.

Die zur Herstellung des erfindungsgemäßen titanhaltigen Zuschlagsstoffes verwendeten Titanerze und titandioxidreichen Schlacken enthalten 15 bis 95, bevorzugt 25 bis 90 Gew.-% TiO₂ (berechnet aus dem Gesamttitangehalt). Die Titanerze können ungereinigt oder nach Abtrennung von Verunreinigungen sowie der Gangart zur Herstellung des titanhaltigen Zuschlagstoffes eingesetzt werden.

Der erfindungsgemäße Zuschlagstoff enthält 20 bis 98, bevorzugt 25 bis 95, besonders bevorzugt 30 bis 95, ganz besonders bevorzugt 40 bis 90 Gew.-% TiO₂ (berechnet aus dem Gesamttitangehalt).

Der erfindungsgemäße Zuschlagstoff kann neben den titanhaltigen Materialien ausgewählt aus Titanerzen und / oder titandioxidreichen Schlacken weiterhin synthetische titandioxidhaltige Materialien enthalten.

Die erfindungsgemäß vorgesehenen synthetischen titandioxidhaltigen Materialien enthalten 20 bis 100, bevorzugt 30 bis 100 Gew.-% TiO₂ (berechnet aus dem Gesamttitangehalt).

Die synthetischen titandioxidhaltigen Materialien können dabei ausgewählt sein aus den nachfolgend aufgeführten Materialien oder deren Mischungen:
- Zwischen-, Kuppel- und/oder Fertigprodukte aus der Herstellung von Titandioxid. Die Materialien können dabei sowohl aus der Herstellung von Titandioxid nach dem Sulfat- als aus der Herstellung von Titandioxid nach dem Chloridverfahren stammen. Die Zwischen- und Kuppelprodukte können aus der laufenden TiO₂-Produktion abgezogen sein;
- Rückstände aus der Herstellung von Titandioxid. Die Materialien können dabei sowohl aus der Herstellung von Titandioxid nach dem Sulfat- als aus der Herstellung von Titandioxid nach Chloridverfahren stammen; soweit nötig, werden die Materialien vor dem Einsatz zur Herstellung von titanhaltigen Zuschlagstoffen vorbehandelt, beispielsweise durch Neutralisation, Waschen, und/oder Vortrocknung.
- Rückstände aus der chemischen Industrie, beispielsweise aus TiO₂-haltigen Katalysatoren, wiederum beispielsweise aus DENOX-Katalysatoren.

Die synthetischen titandioxidhaltigen Materialien können in Form von Pulvern, Filterkuchen, Pasten oder Suspensionen eingesetzt werden.

Die Herstellung des erfindungsgemäßen Zuschlagstoffes erfolgt durch Mischung der titanhaltigen Materialien.

Zusätzlich können die titanhaltigen Materialien temperaturbehandelt werden.

Als Temperaturbehandlung wird bevorzugt eine Trocknung angewendet, besonders bevorzugt eine Trocknung bei Temperaturen zwischen 100 und 1200°C.

In Rahmen der Erfindung ist auch vorgesehen, die titanhaltigen Materialien zunächst getrennt zu micronisieren und anschließend in einem Mischer im gewünschten Verhältnis je nach Anwendung zu mischen. Weiterhin ist erfindungsgemäß vorgesehen, die titanhaltigen Materialien zunächst zu mischen und nach Temperaturbehandlung je nach Anwendung zu micronisieren.

Je nach Verwendungszweck kann der erfindungsgemäße titanhaltige Zuschlagstoff weitere Hilfsstoffe und/oder Additive enthalten, beispielsweise Kohle, Reduktionskohle, und/oder Metalloxide, wiederum beispielsweise Eisenoxide
- zur Injektion in metallurgischen Öfen zur Erhöhung der Haltbarkeit der Ofenausmauerungen,

## Patentansprüche

1. Verwendung eines titanhaltigen Zuschlagstoffs zur Injektion in metallurgischen Öfen zur Erhöhung der Haltbarkeit der Ofenausmauerungen, in der Stahlproduktion, wobei der titanhaltiger Zuschlagstoff titanhaltige Materialien enthält, die in der Lage sind, mit bei der Herstellung von metallurgischen Produkten anwesenden Reaktionspartnern hochtemperaturbeständige und verschleißfeste Titanverbindungen, wie beispielsweise Aluminiumtitanate, Magnesiumtitanate, Ti(C,N)-Verbindungen oder Mischungen solcher Verbindungen zu bilden, **dadurch gekennzeichnet, dass** die titanhaltigen Materialien zumindest zu einem Teil aus natürlichen titanhaltigen Materialien und / oder zu einem Teil aus TiO₂-reichen Schlacken bestehen, wobei er zu 100 % eine Feinheit kleiner als 0,2 mm aufweist.

2. Verwendung eines titanhaltigen Zuschlagstoffs gemäß Anspruch 1, **dadurch gekennzeichnet, dass** er als titanhaltiges Material titanhaltige Erze und synthetische titanhaltige Materialien enthält.

3. Verwendung eines titanhaltigen Zuschlagstoffs gemäß Anspruch 1, **dadurch gekennzeichnet, dass** er als titanhaltiges Material TiO₂-reiche Schlacken und synthetische titanhaltige Materiallen enthält.

4. Verwendung eines titanhaltigen Zuschlagstoffs gemäß Anspruch 1, **dadurch gekennzeichnet, dass** er als titanhaltiges Material titanhaltige Erze, TiO₂-relche Schlacken und synthetische titanhaltige Materialien enthält.

5. Verwendung eines titanhaltigen Zuschlagstoffs gemäß einem oder mehreren der Ansprüche 1 bis 4, **dadurch gekennzeichnet, dass** das titanhaltige Erz Ilmenit, Rutil und die titanhaltige Schlacke Sorelschlacke ist.

6. Verwendung eines titanhaltigen Zuschlagstoffs gemäß einem oder mehreren der Ansprüche 1 bis 5, **dadurch gekennzeichnet, dass** er 20 bis 98 TiO₂ enthält (berechnet aus dem Gesamttitangehalt).

7. Verwendung eines titanhaltigen Zuschlagstoffs gemäß einem oder mehreren der Ansprüche 1 bis 6, **dadurch gekennzeichnet, dass** die synthetischen titanhaltigen Materialien ausgewählt sind aus wenigstens einem der nachfolgend aufgeführten Materialien oder deren Mischungen:
- Zwischen-, Kuppel- und/oder Fertigprodukte aus der Herstellung von Titandioxid, wobei die Materialien dabei sowohl aus der Herstellung von Titandioxid nach dem Sulfat- als aus der Herstellung von Titandioxid nach Chloridverfahren stammen und die Zwischen- und Kuppelprodukte aus der laufenden TiO₂-Produktion abgezogen sein können;
- Rückstände aus der Herstellung von Titandioxid oder Mischungen davon, wobei die Materialien dabei sowohl aus der Herstellung von Titandioxid nach dem Sulfat- als aus der Herstellung von Titandioxid nach Chloridverfahren stammen können;
- titanhaltige Rückstände aus der chemischen Industrie.

## Claims

1. Use of a titanium-containing additive for injection in metallurgical furnaces in order to increase the durability of the furnace brick linings in steel production, wherein the titanium-containing additive contains titanium-containing materials that are able to form with co-reactants that are present during the production of metallurgical products high-temperature-resistant and wear-resistant titanium compounds, such as, for example, aluminium titanates, magnesium titanates, Ti(C,N) compounds or mixtures of such compounds, **characterised in that** the titanium-containing materials consist at least in part of natural titanium-containing materials and/or in part of TiO₂-rich slags, wherein it has a 100 % fineness of less than 0.2 mm.

2. Use of a titanium-containing additive according to claim 1, **characterised in that** it contains titanium-containing ores and synthetic titanium-containing materials as titanium-containing material.

3. Use of a titanium-containing additive according to claim 1, **characterised in that** it contains TiO₂-rich slags and synthetic titanium-containing materials as titanium-containing material.

4. Use of a titanium-containing additive according to claim 1, **characterised in that** it contains titanium-containing ores, TiO₂-rich slags and synthetic titanium-containing materials as titanium-containing material.

5. Use of a titanium-containing additive according to one or more of claims 1 to 4, **characterised in that** the titanium-containing ore is ilmenite, rutile, and the titanium-containing slag is Sorel slag.

6. Use of a titanium-containing additive according to one or more of claims 1 to 5, **characterised in that** it contains 20 to 98 % by weight TiO₂ (calculated from the total titanium content).

7. Use of a titanium-containing additive according to one or more of claims 1 to 6, **characterised in that** the synthetic titanium-containing materials are selected from at least one of the materials listed below or mixtures thereof:
- intermediate, coupled and/or finished products from the production of titanium dioxide, in which case the materials can then originate not only from the production of titanium dioxide in accordance with the sulphate process, but also from the production of titanium dioxide in accordance with the chloride process, and the intermediate and coupled products can be drawn off from the current TiO₂-production;
- residues from the production of titanium dioxide or mixtures thereof, in which case the materials can then originate not only from the production of titanium dioxide in accordance with the sulphate process, but also from the production of titanium dioxide in accordance with the chloride process;
- titanium-containing residues from the chemical industry.

## Revendications

1. Utilisation d'un additif contenant du titane pour injection dans des fours métallurgiques afin d'augmenter la durabilité des revêtements de four, dans la production d'acier, étant entendu que l'additif contenant du titane contient des matériaux qui contiennent du titane et qui sont capables de former, avec des réactifs présents lors de la fabrication de produits métallurgiques, des composés du titane qui sont stables à haute température et résistants à l'usure, comme par exemple des titanates d'aluminium, des titanates de magnésium, des carbonitrures de titane Ti(C,N), ou des mélanges de tels composés,
**caractérisée en ce que** les matériaux contenant du titane sont au moins constitués, pour une partie, de matériaux naturels contenant du titane et/ou, pour une partie, de scories riches en dioxyde de titane TiO₂, et que l'additif présente à 100 % une finesse inférieure à 0,2 mm.

2. Utilisation d'un additif contenant du titane, conforme à la revendication 1, **caractérisée en ce que** l'additif contient, en tant que matériaux contenant du titane, des minerais contenant du titane et des matériaux de synthèse contenant du titane.

3. Utilisation d'un additif contenant du titane, conforme à la revendication 1, **caractérisée en ce que** l'additif contient, en tant que matériaux contenant du titane, des scories riches en dioxyde de titane TiO₂ et des matériaux de synthèse contenant du titane.

4. Utilisation d'un additif contenant du titane, conforme à la revendication 1, **caractérisée en ce que** l'additif contient, en tant que matériaux contenant du titane, des minerais contenant du titane, des scories riches en dioxyde de titane TiO₂ et des matériaux de synthèse contenant du titane.

5. Utilisation d'un additif contenant du titane, conforme à l'une ou plusieurs des revendications 1 à 4, **caractérisée en ce que** le minerai contenant du titane est de l'ilménite ou du rutile et **en ce que** les scories contenant du titane sont des scories Sorel.

6. Utilisation d'un additif contenant du titane, conforme à l'une ou plusieurs des revendications 1 à 5, **caractérisée en ce que** l'additif contient de 20 à 98 % de dioxyde de titane TiO₂ (teneur rapportée à la quantité totale de titane contenue).

7. Utilisation d'un additif contenant du titane, conforme à l'une ou plusieurs des revendications 1 à 6, **caractérisée en ce que** les matériaux de synthèse contenant du titane sont choisis, au nombre d'au moins un, parmi les matériaux suivants et leurs mélanges :
- produits intermédiaires, c-o-produits et/ou produits finis issus de la production de dioxyde de titane, étant entendu que ces matériaux peuvent provenir tant de la production de dioxyde de titane selon le procédé au sulfate que de la production de dioxyde de titane selon le procédé au chlore, et que les produits intermédiaires et les co-produits peuvent avoir été récupérés pendant le déroulement de la production de dioxyde de titane ;
- résidus issus de la production de dioxyde de titane ou mélanges de tels résidus, étant entendu que ces matériaux peuvent provenir tant de la production de dioxyde de titane selon le procédé au sulfate que de la production de dioxyde de titane selon le procédé au chlorure,
- résidus contenant du titane et provenant de l'industrie chimique.
